# FASCICULE DE BREVET EUROPEEN

(11) **EP 3 148 831 B1**
(45) Date de publication et mention de la délivrance du brevet: **24.10.2018**
(21) Numéro de dépôt: 15725757.7
(22) Date de dépôt: 17.04.2015
(51) Int. Cl.: B60K 13/04, F01N 13/08

(54) **AGENCEMENT DE CARROSSERIE D'UN VÉHICULE AUTOMOBILE COMPRENANT UNE CANULE D'ÉCHAPPEMENT FICTIVE**
KAROSSERIEANORDNUNG EINES KRAFTFAHRZEUGS MIT EINEM IMITIERTEN AUSPUFFROHR
BODYWORK ARRANGEMENT OF A MOTOR VEHICLE WITH AN EXHAUST PIPE IMITATION

(30) Priorité: 02.06.2014 FR 1454972
(43) Date de publication de la demande: 05.04.2017
(73) Titulaire: Renault S.A.S., 92100 Boulogne-Billancourt (FR)
(72) Inventeur: LAUDILLAY, Denis, 94550 Chevilly Larue (FR)
(86) Numéro de dépôt international: PCT/FR2015/051057
(87) Numéro de publication internationale: WO 2016/001496

(56) Documents cités:
- EP-A1- 2 264 293
- EP-A2- 1 721 811
- DE-A1- 19 940 102
- DE-A1-102004 038 782
- DE-A1-102004 044 078
- US-A1- 2009 236 868

## Description

### Domaine de l'invention :

La présente invention concerne un agencement de carrosserie d'un véhicule automobile, typiquement un bouclier arrière du véhicule comprenant un logement recevant une pièce de finition, en l'espèce une canule d'échappement factice emboitée par l'extérieur du véhicule dans le logement jusqu'à une position de fixation via des moyens de clippage.

### Etat de la technique :

On connaît dans l'état de la technique des véhicules équipés de canule d'échappement factice. La canule d'échappement factice est une pièce de finition visible de l'arrière du véhicule qui suggère que l'échappement s'effectue par cette voie. En réalité, une canule factice dissimule une sortie traditionnelle d'échappement montée directement sur la ligne d'échappement du véhicule à l'arrière d'un silencieux. Une telle canule factice permet d'utiliser des moyens d'échappement classiques et à coût minimal tout en offrant un style et une esthétique typiques de véhicules sportifs ou hauts de gamme.

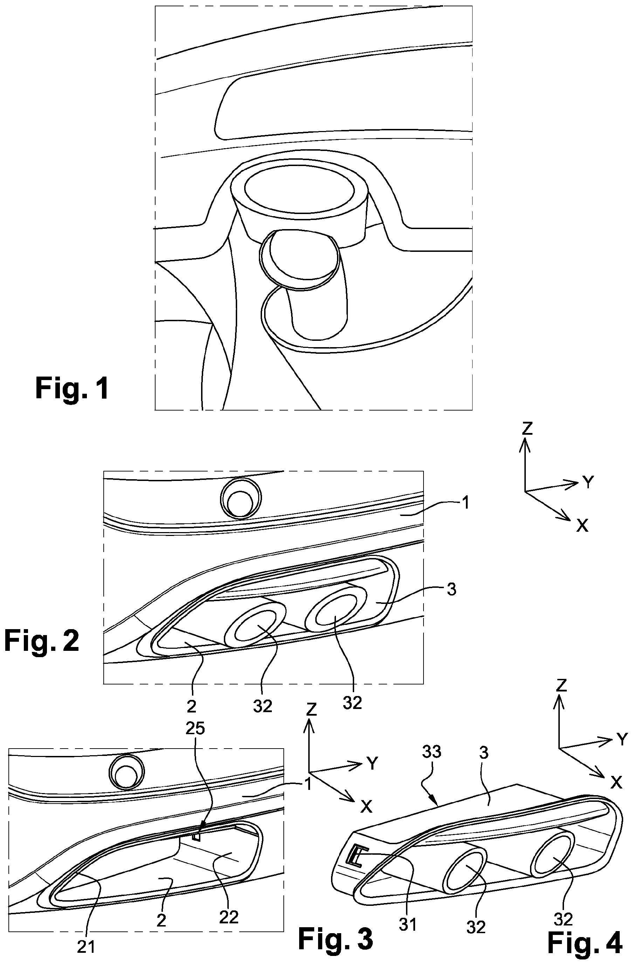

On connait des véhicules pourvus d'une canule factice, celle-ci étant soudée directement sur la ligne d'échappement à proximité de la sortie réelle, de façon à masquer cette dernière. Un tel montage nécessite une opération de soudage qui est couteuse. En outre ce dispositif connu est peu flexible et non personnalisable puisqu'il n'offre pas au client la possibilité de choisir l'esthétique de la canule factice ou de modifier l'aspect de celle-ci en après-vente. On note également qu'une telle canule fictive dissimule imparfaitement la sortie réelle de la ligne d'échappement puisqu'il est possible de l'apercevoir en se penchant vers le sol (cf. figure 1).

On connait d'autres véhicules équipés d'au moins une sortie d'échappement fictive ou non, conformée dans le bouclier arrière, pourvue d'une cadre ou jonc de finition périphérique épousant le bord périphérique de la sortie. Ce cadre de finition est typiquement chromé et monté sur le bord d'une ouverture ménagée dans le bouclier arrière du véhicule, soulignant une sortie d'échappement à l'esthétique améliorée. La mise en position et le maintien d'un tel cadre de finition sont aléatoires et exposés à des conditions de dilatation différentielle (entre le bouclier et le cadre de finition) et d'usure qui peuvent impliquer le détachement du cadre de finition. En outre un tel cadre de finition est fragile et peu adapté à une personnalisation et à un remplacement en après-vente selon le besoin de personnalisation de l'utilisateur.

Par ailleurs on connait le document DE 10 2004 044078 A1 décrivant un agencement de carrosserie d'un véhicule comprenant un élément de carrosserie pourvu d'un logement recevant un moyen d'éclairage.

Le document DE 10 2004 038782 A1, qui montre un agencement selon le préambule de la revendication 1, décrit un agencement connu de carrosserie d'un véhicule comprenant une sortie d'échappement adaptée à des températures élevées. Ces documents ne portent pas sur une canule fictive d'échappement.

### But de l'invention :

L'invention a pour but de pallier tout ou partie des inconvénients précédents.

### Objet de l'invention :

A cet effet, l'invention a pour objet un agencement de carrosserie d'un véhicule automobile, comprenant un élément de carrosserie pourvu d'un logement recevant une pièce de finition emboitée par l'extérieur du véhicule dans le logement jusqu'à une position de fixation via des moyens de clippage, caractérisé en ce que la pièce de finition constitue une canule d'échappement factice et en ce que le logement a des parois latérales s'étendant suivant la direction longitudinale du véhicule sur une dimension d'au moins 20 mm, de façon à guider la pièce de finition à la façon d'un tiroir lors de son introduction dans le logement suivant la direction longitudinale du véhicule.

La pièce de finition est de ce fait positionnée de façon précise par rapport à l'élément de carrosserie. La fixation dans le logement est robuste. La pièce de finition peut être choisie de façon personnalisée. Elle peut être facilement remplacée en après-vente.

Selon d'autres caractéristiques avantageuses de l'invention :
- le logement est délimité par des parois latérales agencées de façon à constituer un panier de réception de la pièce de finition,
- les parois latérales comportent au moins un évidement,
- le logement de réception de la pièce de finition comporte un fond débouchant,
- les parois latérales sont venues de matière par injection plastique avec l'élément de carrosserie,
- les moyens de clippage sont constitués de reliefs, notamment des pates élastiques coopérant par encliquetage avec des fenêtres, ces reliefs et fenêtres étant conformés respectivement sur la pièce de finition et les parois latérales du logement, ou inversement, de chaque côté de la pièce de finition,
- la canule d'échappement factice a la forme générale d'un bac dont les parois latérales ont un bord arrière libre prenant appui sur un bord correspondant du logement en le recouvrant au moins en partie,
- la pièce de finition comporte au moins un cylindre s'étendant depuis une paroi de fond du bac vers l'arrière du véhicule suivant la direction longitudinale du véhicule,
- l'élément de carrosserie constitue un bouclier arrière du véhicule.

L'invention a également pour objet un véhicule automobile comprenant au moins un élément de carrosserie ayant tout ou partie des caractéristiques précédentes.

### Exposé de l'invention :

L'invention sera mieux comprise à la lecture de la description suivante d'un exemple non limitatif de l'invention, et à la lumière des dessins annexés sur lesquels :
- la figure 1 représente un agencement de carrosserie connu de l'art antérieur, comprenant un bouclier arrière d'un véhicule laissant passer au travers d'une échancrure une canule fictive soudée directement sur la ligne d'échappement,
- la figure 2 représente une vue partielle d'un agencement de carrosserie selon l'invention comprenant un élément de carrosserie, typiquement un bouclier arrière d'un véhicule automobile, pourvu d'une pièce de finition, en l'espèce une canule fictive selon l'invention, située ici dans une région latérale gauche du véhicule,
- la figure 3 est une vue analogue à celle de la figure 2, représentant l'élément carrosserie et son logement de réception vide destiné à accueillir la pièce de finition, cette dernière n'étant pas représentée,
- la figure 4 est une vue de la pièce de finition selon l'invention, constituant ici une canule d'échappement fictive, et
- la figure 5 est une vue depuis l'intérieur de l'élément de carrosserie et vers l'arrière du véhicule, représentant le logement de réception et la pièce de finition montée et positionnée dans ce dernier.

Pour les besoins de la description, les directions et orientations sont indiquées en référence au repère XYZ classiquement utilisé en conception automobile, dans lequel X est la direction longitudinale avant-arrière du véhicule, dirigé vers l'arrière, Y est la direction transversale au véhicule, dirigé vers la droite et Z la direction verticale dirigée vers le haut.
Les notions avant-arrière s'entendent par rapport au sens de marche normal du véhicule qui est dirigé vers l'avant.
Le terme « sensiblement » indique qu'un léger écart est admis par rapport à une position ou disposition nominale déterminée, tout en restant inclus dans le cadre de l'invention. Par exemple « sensiblement vertical » indique qu'un écart de l'ordre de 10° par rapport à une orientation strictement verticale est admise dans le cadre de l'invention.

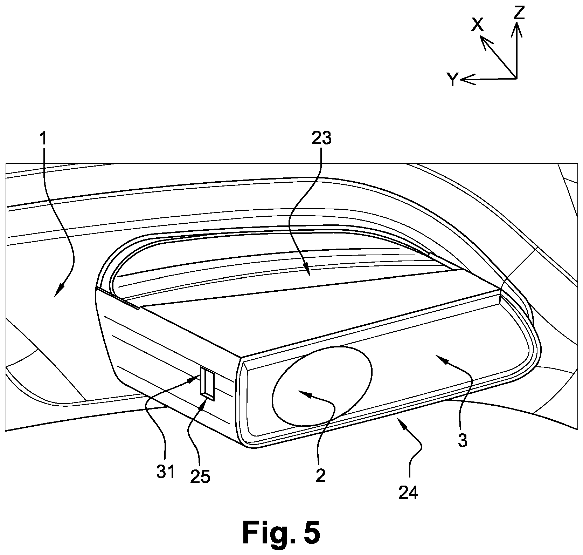

On a représenté à la figure 2 un agencement de carrosserie 1 d'un véhicule automobile comprenant un élément de carrosserie, typiquement un bouclier arrière d'un véhicule. L'exemple d'un bouclier arrière n'est pas limitatif. L'invention inclut les cas où l'élément de carrosserie est un élément rapporté sur le bouclier arrière ou le prolongeant, par exemple un diffuseur arrière.
En référence aux figures 2 à 5, l'élément de carrosserie 1 comprend un logement 2 recevant une pièce de finition 3, emboitée par l'extérieur du véhicule dans le logement jusqu'à une position de fixation via des moyens de clippage. La pièce de finition 3 constitue une canule d'échappement fictive comme on le verra ci-après. Le logement 2 a des parois latérales 21, 22 s'étendant suivant la direction longitudinale X du véhicule sur une dimension d'au moins 20 mm, de façon à guider la pièce de finition 3 à la façon d'un tiroir lors de son introduction dans le logement 2 suivant la direction longitudinale X du véhicule. Les parois latérales de la pièce de finition 3 sont conformées pour épouser les parois latérales 21, 22 du logement 2. Le logement 2 et la pièce de finition 3 sont typiquement situés dans une région latérale du bouclier arrière du véhicule. La paroi latérale 22 située du côté intérieur (ou central) du véhicule est par exemple sensiblement verticale, tandis que la paroi latérale 21 située du côté extérieur du véhicule est inclinée de façon à conférer une forme en pointe au logement 2 et à la pièce de finition 3 emboitée dans celui-ci.
Les parois latérales 21, 22 du logement 2 sont agencées de façon à constituer un panier de réception de la pièce de finition 3. Les parois latérales comportent à cet effet au moins un évidement 23, ici en partie supérieure du logement 2 comme cela est visible à la figure 5. L'évidement 23 allège la structure sans dégrader la rigidité. Dans l'exemple illustré, l'évidement 23 s'étend sensiblement sur toute la largeur du logement 2, considérée suivant la direction transversale Y.
En outre, le logement 2 de réception de la pièce de finition 3 comporte un fond débouchant 24, là encore pour des questions d'allègement.
Le logement 2 est typiquement réalisé d'un seul tenant avec le corps de l'élément de carrosserie 1. Les parois latérales 21, 22 sont venues de matière par injection plastique avec l'élément de carrosserie.
Des moyens de clippage sont prévus de chaque côté latéral de la pièce de finition 3, entre ses parois latérales et les parois latérales 21, 22 correspondantes du logement. Ces moyens de clippage sont constitués de reliefs 31, notamment des pates élastiques (figure 4) coopérant par encliquetage avec des fenêtres 25. Les reliefs 31 et fenêtres 25 conjuguées sont conformés respectivement sur la pièce de finition 3 et les parois latérales 21, 22 du logement 2. Dans un autre mode de réalisation non illustré de l'invention, les reliefs et fenêtres peuvent être ménagés de façon inverse, c'est-à-dire respectivement sur les parois latérales du logement et sur la pièce de finition.
Comme déjà évoqué, la pièce de finition est une canule d'échappement factice ayant la forme général d'un bac dont l'ouverture est tournée vers l'arrière du véhicule. La forme en bac ou boitier ouvert de la pièce de finition lui confère une grande rigidité et une forme extérieure adaptée à être guidée le long des parois latérales 21, 22 du logement 2. Les parois haute et basse de la forme en bac de la pièce de finition 3 sont orientées de façon sensiblement horizontale. Les parois latérales et horizontales ont un bord arrière libre recourbé vers l'extérieur du bac, prenant appui sur un bord correspondant du logement 2.
En référence aux figures 2 et 4, la pièce de finition 3 comporte au moins un cylindre 32, typiquement mais non limitativement deux cylindres formant des puits s'étendant depuis une paroi de fond 33 du bac en direction de l'arrière du véhicule suivant la direction longitudinale X du véhicule. Ces cylindres ont la forme et suggèrent des sorties d'échappement, en réalité fictives.
Compte tenu de la forme galbée de l'élément de carrosserie 1 dans les régions latérales du véhicule, la profondeur des parois latérales de la pièce de finition 3 et des parois latérales 21, 22 du logement 2 mesurée suivant la direction longitudinale X du véhicule n'est pas la même de chaque côté de la pièce de finition 3, comme cela est visible à la figure 4. Ainsi du côté extérieur du véhicule (situé du côté gauche sur les figures 2 à 4), les parois latérales sont moins profondes et s'étendent par exemple sur une profondeur de l'ordre de 20 mm, tandis que du côté intérieur du véhicule (situé du côté droit sur les figures 2 à 4), les parois latérales du logement et de la pièce de finition s'étendent par exemple sur une profondeur de l'ordre de 50 mm, ces valeurs étant données à titre d'exemples non limitatifs. La paroi de fond 33 de la pièce de finition et les bords adjacent du logement 2 sont inscrits dans un plan sensiblement vertical.
Bien entendu, l'invention n'est pas limitée aux modes ou variantes de réalisation décrits précédemment et comprends tous les équivalents techniques de ces moyens.
On note que l'invention inclut le cas d'un véhicule pourvu d'un bouclier arrière ou d'un diffuseur équipé de deux pièces de finition (canules d'échappement fictives) situées sur les deux régions latérales du véhicule, de façon symétrique. L'invention inclut également le cas d'un véhicule pourvu d'un bouclier arrière ou diffuseur équipé d'une pièce de finition (canule d'échappement fictive) unique située dans une région centrale.

## Revendications

1. Agencement de carrosserie d'un véhicule automobile comprenant un élément de carrosserie (1) du véhicule, lequel est pourvu d'un logement (2) recevant une pièce de finition (3) emboitée par l'extérieur du véhicule dans le logement (2) jusqu'à une position de fixation via des moyens de clippage (31, 25), **caractérisé en ce que** la pièce de finition (3) constitue une canule d'échappement factice et **en ce que** le logement (2) a des parois latérales (21, 22) s'étendant suivant la direction longitudinale (X) du véhicule sur une dimension d'au moins 20 mm, de façon à guider la pièce de finition (3) à la façon d'un tiroir lors de son introduction dans le logement suivant la direction longitudinale (X) du véhicule.

2. Agencement de carrosserie selon la revendication 1, **caractérisé en ce que** le logement (2) est délimité par des parois latérales (21, 22) agencées de façon à constituer un panier de réception de la pièce de finition (3).

3. Agencement de carrosserie selon la revendication 1 ou 2 **caractérisé en ce que** les parois latérales du logement (2) comportent au moins un évidement (23).

4. Agencement de carrosserie selon l'une quelconque des revendications précédentes, **caractérisé en ce que** le logement (2) de réception de la pièce de finition (3) comporte un fond débouchant (24).

5. Agencement de carrosserie selon l'une quelconque des revendications précédentes, **caractérisé en ce que** les parois latérales (21, 22) sont venues de matière par injection plastique avec l'élément de carrosserie (1).

6. Agencement de carrosserie selon l'une quelconque des revendications précédentes, **caractérisé en ce que** les moyens de clippage (31, 25) sont constitués de reliefs (31), notamment des pattes élastiques coopérant par encliquetage avec des fenêtres (25), ces reliefs et fenêtres étant conformés respectivement sur la pièce de finition (3) et les parois latérales (21, 22) du logement (2), ou inversement, de chaque côté de la pièce de finition (3).

7. Agencement de carrosserie selon l'une quelconque des revendications précédentes, **caractérisé en ce que** la canule d'échappement factice a la forme générale d'un bac dont les parois latérales ont un bord arrière libre prenant appui sur un bord correspondant du logement en le recouvrant au moins en partie.

8. Agencement de carrosserie selon la revendication précédente, **caractérisé en ce que** la pièce de finition (3) comporte au moins un cylindre (32) s'étendant depuis une paroi de fond (33) du bac vers l'arrière du véhicule suivant la direction longitudinale (X) du véhicule.

9. Agencement de carrosserie selon l'une quelconque des revendications précédentes, **caractérisé en ce que** l'élément de carrosserie (1) constitue un bouclier arrière du véhicule.

10. Véhicule automobile, **caractérisé en ce qu'**il comprend au moins un agencement de carrosserie selon l'une quelconque des revendications précédentes.

## Patentansprüche

1. Karosserieanordnung eines Kraftfahrzeugs, die ein Karosserieelement (1) des Fahrzeugs enthält, das mit einer Aufnahme (2) versehen ist, die ein Abschlussbauteil (3) empfängt, das von außerhalb des Fahrzeugs bis zu einer Befestigungsstellung mittels Einklinkeinrichtungen (31, 25) in die Aufnahme (2) eingesteckt wird, **dadurch gekennzeichnet, dass** das Abschlussbauteil (3) eine Auspuffendrohr-Attrappe bildet, und dass die Aufnahme (2) Seitenwände (21, 22) hat, die sich gemäß der Längsrichtung (X) des Fahrzeugs über eine Abmessung von mindestens 20 mm erstrecken, um das Abschlussbauteil (3) bei seiner Einführung in die Aufnahme gemäß der Längsrichtung (X) des Fahrzeugs nach Art eines Einschubs zu führen.

2. Karosserieanordnung nach Anspruch 1, **dadurch gekennzeichnet, dass** die Aufnahme (2) durch Seitenwände (21, 22) begrenzt wird, die so angeordnet sind, dass sie einen Empfangsrahmen des Abschlussbauteils (3) bilden.

3. Karosserieanordnung nach Anspruch 1 oder 2, **dadurch gekennzeichnet, dass** die Seitenwände der Aufnahme (2) mindestens eine Aussparung (23) aufweisen.

4. Karosserieanordnung nach einem der vorhergehenden Ansprüche, **dadurch gekennzeichnet, dass** die Aufnahme (2) zum Empfang des Abschlussbauteils (3) einen Durchgangsboden (24) aufweist.

5. Karosserieanordnung nach einem der vorhergehenden Ansprüche, **dadurch gekennzeichnet, dass** die Seitenwände (21, 22) durch Kunststoffspritzguss einstückig mit dem Karosserieelement (1) ausgebildet sind.

6. Karosserieanordnung nach einem der vorhergehenden Ansprüche, **dadurch gekennzeichnet, dass** die Einklinkeinrichtungen (31, 25) aus Reliefs (31) bestehen, insbesondere elastische Laschen, die durch Einrasten mit Fenstern (25) zusammenwirken, wobei diese Reliefs und Fenster auf dem Abschlussbauteil (3) bzw. den Seitenwänden (21, 22) der Aufnahme (2) oder umgekehrt auf jeder Seite des Abschlussbauteils (3) ausgebildet sind.

7. Karosserieanordnung nach einem der vorhergehenden Ansprüche, **dadurch gekennzeichnet, dass** die Auspuffendrohr-Attrappe die allgemeine Form eines Kastens hat, dessen Seitenwände einen freien hinteren Rand haben, der sich auf einen entsprechenden Rand der Aufnahme auflegt, indem er ihn zumindest zum Teil bedeckt.

8. Karosserieanordnung nach dem vorhergehenden Anspruch, **dadurch gekennzeichnet, dass** das Abschlussbauteil (3) mindestens einen Zylinder (32) aufweist, der sich von einer Bodenwand (33) des Kastens gemäß der Längsrichtung (X) des Fahrzeugs zur Rückseite des Fahrzeugs erstreckt.

9. Karosserieanordnung nach einem der vorhergehenden Ansprüche, **dadurch gekennzeichnet, dass** das Karosserieelement (1) einen hinteren Stoßfänger des Fahrzeugs bildet.

10. Kraftfahrzeug, **dadurch gekennzeichnet, dass** es mindestens eine Karosserieanordnung nach einem der vorhergehenden Ansprüche enthält.

## Claims

1. Bodywork arrangement of a motor vehicle comprising a bodywork element (1) of the vehicle, which is provided with a housing (2) receiving a finishing piece (3) fitted from the outside of the vehicle into the housing (2) to a position of fixing via clipping means (31, 25), **characterized in that** the finishing piece (3) constitutes a dummy exhaust pipe and **in that** the housing (2) has lateral walls (21, 22) extending in the longitudinal direction (X) of the vehicle over a dimension of at least 20 mm, so as to guide the finishing piece (3) in the manner of a drawer upon its introduction into the housing in the longitudinal direction (X) of the vehicle.

2. Bodywork arrangement according to Claim 1, **characterized in that** the housing (2) is delimited by lateral walls (21, 22) arranged so as to constitute a basket for receiving the finishing piece (3).

3. Bodywork arrangement according to Claim 1 or 2, **characterized in that** the lateral walls of the housing (2) include at least one void (23).

4. Bodywork arrangement according to any one of the preceding claims, **characterized in that** the housing (2) for receiving the finishing piece (3) has an open bottom (24) .

5. Bodywork arrangement according to any one of the preceding claims, **characterized in that** the lateral walls (21, 22) are made of a single piece by plastic injection with the bodywork element (1).

6. Bodywork arrangement according to any one of the preceding claims, **characterized in that** the clipping means (31, 25) are composed of reliefs (31), in particular elastic tabs cooperating by snap-fitting with openings (25), these reliefs and openings being conformed respectively on the finishing piece (3) and the lateral walls (21, 22) of the housing (2), or, conversely, on each side of the finishing piece (3).

7. Bodywork arrangement according to any one of the preceding claims, **characterized in that** the dummy exhaust pipe has the general form of a pan whose lateral walls have a free rear edge bearing on a corresponding edge of the housing by at least partly overlapping same.

8. Bodywork arrangement according to the preceding claim, **characterized in that** the finishing piece (3) includes at least one cylinder (32) extending from a bottom wall (33) of the pan towards the rear of the vehicle in the longitudinal direction (X) of the vehicle.

9. Bodywork arrangement according to any one of the preceding claims, **characterized in that** the bodywork element (1) constitutes a rear bumper of the vehicle.

10. Motor vehicle, **characterized in that** it comprises at least one bodywork arrangement according to any one of the preceding claims.
